Europäisches Patentamt

European Patent Office

Office européen des brevets

(19)

(11) Veröffentlichungsnummer: **0 529 138 B1**

(12) # EUROPÄISCHE PATENTSCHRIFT

(45) Veröffentlichungstag der Patentschrift: 25.10.95

(51) Int. Cl.⁶: **B60K 41/06**

(21) Anmeldenummer: **91114629.8**

(22) Anmeldetag: **30.08.91**

---

(54) **Steuerung für einen Kraftfahrzeugantrieb mit einem automatischen Getriebe.**

---

(43) Veröffentlichungstag der Anmeldung:
**03.03.93 Patentblatt 93/09**

(45) Bekanntmachung des Hinweises auf die
Patenterteilung:
**25.10.95 Patentblatt 95/43**

(84) Benannte Vertragsstaaten:
**DE FR GB**

(56) Entgegenhaltungen:
EP-A- 0 323 257
DE-C- 2 935 916
GB-A- 2 151 727
US-A- 4 945 481
US-A- 4 968 999

**Fachkunde Kraftfahrzeugtechnik, 23. Auflage, Verlag Europa Lehrmittel**

(73) Patentinhaber: **SIEMENS AKTIENGESELL-SCHAFT**
**Wittelsbacherplatz 2**
**D-80333 München (DE)**

(72) Erfinder: **Kammerl, August, Dipl.-Ing. (FH)**
**Wiesenweg 14**
**W-8411 Brunn (DE)**
Erfinder: **Graf, Friedrich, Dipl.-Ing. (FH)**
**Amselweg 5**
**W-8400 Regensburg (DE)**

---

EP 0 529 138 B1

## Beschreibung

Die Erfindung betrifft eine Steuerung nach dem Oberbegriff von Anspruch 1. Eine solche Steuerung für einen Kraftfahrzeugantrieb mit einem automatischen Getriebe muß das Getriebe so steuern, daß die Schaltvorgänge komfortabel ablaufen, insbesondere das Schalten ruckfrei erfolgt. Außerdem ist der Verschleiß der Reibelemente - Kupplungen und Bremsen - in dem Getriebe möglichst gering zu halten. Dazu dürfen Schleifzeiten eine vorgegebene Dauer nicht überschreiten. Zu diesem Zweck wird während des Schaltvorgangs in die Motorsteuerung eingegriffen, um das Drehmoment zu ändern, in den meisten Fällen um es zu verringern.

Bei einer bekannten derartigen Steuerung enthält die Motorsteuerung mehrere Kennfelder, und das von der Getriebesteuerung an die Motorsteuerung übermittelte Eingriffssignal ist lediglich ein Umschaltsignal, durch daß von einem ersten auf ein zweites Kennfeld umgeschaltet ist. Das zweite Kennfeld bewirkt für die verschiedenen Motorzustände jeweils reduzierte Werte des Motordrehmoments, um beispielsweise den Momentenanstieg durch das Greifen eines Freilaufs in dem automatischen Getriebe zu dämpfen und somit den Schaltruck zu verringern oder den Verschleiß schleifender Reibelemente zu vermindern (DE 29 35 916 C2). Die reduzierten Werte des Motordrehmoments sind von dem Getriebehersteller durch aufwendige Versuche zu ermitteln. Weitere Einflußgrößen auf die Motordrehmoment-Reduktion können nicht berücksichtigt werden.

Mit einer ebenfalls bekannten, dem Oberbegriff des Anspruchs 1 entsprechenden Motorsteuerung für ein Kraftfahrzeug mit automatischen Getriebe sollen Schaltrucke vermieden werden. Gemessen werden u.a. die Motordrehzahl, die Motorlast und der Betätigungsdruck in den Getriebekupplungen. Das Motordrehmoment und das in dem Getriebe übertragbare Drehmoment werden aus Meßdaten berechnet und miteinander verglichen. Der Motor wird in Abhängigkeit von dem Vergleichsergebnis gesteuert. Das Motordrehmoment wird an das übertragbare Drehmoment herangeführt. Gesteuert werden der Zündzeitpunkt, die Kraftstoffeinspritzung und/oder die Drosselklappenöffnung. Weitere Parameter der Getriebesteuerung werden nicht berücksichtigt (EP-A 0 323 257).

Der Erfindung liegt die Aufgabe zugrunde, eine Steuerung der eingangs genannten Art zu schaffen, die ein komfortables und verschleißarmes Schalten ermöglicht und die weitere Einflußgrößen auf den Schaltvorgang berücksichtigt.

Diese Aufgabe wird durch eine Steuerung nach Patentanspruch 1 gelöst.

Vorteilhafte Weiterbildungen der Erfindung ergeben sich aus den Unteransprüchen.

Ein Ausführungsbeispiel der Erfindung wird im folgenden anhand der Zeichnung erläutert. Es zeigen:

Figur 1
eine Steuerung gemäß der Erfindung als Blockschaltbild,

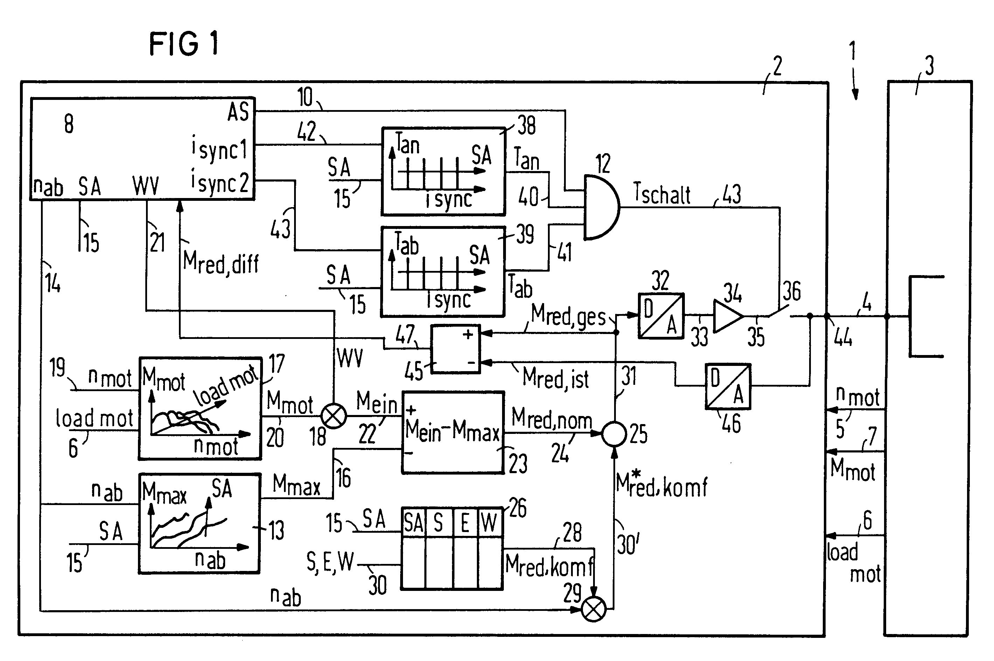

Figur 2 bis Figur 8
den zeitlichen Verlauf verschiedener in der Steuerung von Figur 1 übertragener Signale, und

Figur 8
ein weiteres Beispiel eines Steuersignals.

Eine Steuerung 1 für einen - in der Zeichnung nicht dargestellten Kraftfahrzeugantrieb - enthält eine Getriebesteuerung 2 und eine Motorsteuerung 3, die über Signal-Leitungen 4, 5, 6 und ggf. 7 miteinander verbunden sind (Figur 1).

Die Getriebesteuerung 2 weist einen konventionellen Schaltungsteil 8 auf, der die Funktionen herkömmlicher Getriebesteuerungen in bekannter Weise ausführt. Außerdem enthält sie zusätzliche Schaltungsteile, die nachfolgend beschrieben werden. In dem Schaltungsteil 8 wird ein Aktivierungssignal AS erzeugt und über eine Leitung 10 auf ein UND-Glied 12 übertragen. Dieses Signal zeigt einen bevorstehenden Schaltvorgang an und dient zur Vorbereitung eines zugehörigen Motoreingriffs.

Das noch zur erläuternde Steuersignal wird von der Getriebesteuerung 2 über die Leitung 4 an die Motorsteuerung 3 übertragen. Die Motordrehzahl $n_{mot}$ wird von der Motorsteuerung 3 über die Leitung 5 an die Getriebesteuerung 1 übertragen. Außerdem kann eine Information über das Mototdrehmoment $M_{mot}$ von der Motorsteuerung über die Leitung 7 an die Getriebesteuerung übermittelt werden. Schließlich gelangt von der Motorsteuerung 3 über die Leitung 6 an die Getriebesteuerung 1 eine Information über die Motorlast $load_{mot}$.

Zur weiteren Erläuterung der Wirkungsweise der Steuerung 1 wird auf nachfolgende funktionale Abhängigkeit des während eines Schaltvorgangs verringerten oder reduzierten, drehzahlabhängigen Motordrehmoments $M_{red,ges}$ von verschiedenen Einflußgrößen verwiesen, so wie es die Getriebesteuerung 2 von der Motorsteuerung 3 fordert:

$$M_{red,ges}(n_{in}/n_{out}) = f(M_{red,nom}, M_{red,komf}, n_{in}{}^*i_x/n_{out}, SA)$$

Hierin sind:

$i_x$ das Übersetzungsverhältnis des Getriebes in dem Gang x.

$n_{in}{}^*i_x/n_{out} = i_{sync}$ das Verhältnis der Getriebeeingangs-drehzahl multipliziert mit dem Übersetzungsverhältnis geteilt durch die Getriebeausgangsdrehzahl. Dieser Quotient repräsentiert den aktuellen Kraftschluß des Getriebes, und hat im stationären Fahrbetrieb den Wert "1".

$M_{red,nom}$ der nominale Wert der Drehmomentenreduktion während der Schaltung, der durch die zulässige Verlustenergie in den Schaltelementen während der Schaltung bestimmt wird. Dieser Wert wird durch eine Subtraktion des für den Schaltvorgang maximal zulässigen Getriebeeingangsdrehmoments $M_{max}$, das von der Schaltungsart SA und der Getriebeabtriebsdrehzahl $n_{ab}$ abhängt, von dem momentanen Getriebeingangsdrehmoment $M_{ein}$, gebildet.

$M_{red,komf}$ ein den Schaltungskomfort charakterisierender Wert der Momentenreduktion, der aus der Schaltungsart SA und dem Fahrprogramm multipliziert mit der Getriebeabtriebsdrehzahl gebildet wird.

Ein Kennfeldspeicher 13 empfängt von dem Schaltungsteil 8 über eine Leitung 14 die Getriebeabtriebsdrehzahl nab und über eine Leitung 15 ein Signal SA, das die Schaltungsart - d.h. ob es sich um eine Hoch- oder eine Rückschaltung und um eine Schaltung unter Last oder eine lastfreie Schaltung handelt - angibt. In dem Kennfeldspeicher 13 ist das während des Schaltens maximal zulässige Getriebeeingangsdrehmoment $M_{max}$ in Abhängigkeit von $n_{ab}$ und von SA abgelegt. Der Wert $M_{max}$ wird über eine Leitung 16 an einen Eingang eines Vergleichers oder Subtraktionsgliedes 23 gelegt.

In einem Motorkennfeld 17 wird über eine Signal-Leitung 19 die Motordrehzahl $n_{mot}$ und über die Signal-Leitung 6 die Motorlast $load_{mot}$ empfangen und ein in Abhängigkeit von diesen Parametern gespeichertes Motorausgangsdrehmoment $M_{mot}$ über eine Signal-Leitung 20 an einen Multiplizierer 18 gelegt. Dort wird es mit der von dem Schaltungsteil 8 ermittelten und über eine Leitung 21 übertragenen Wandlerverstärkung WV multipliziert: $M_{ein} = WV * M_{mot}$ , worin die Wandlerverstärkung WV in der Getriebesteuerung 2 bekannt ist, und das Motordrehmoment $M_{mot}$ entweder von der Motorsteuerung 3 oder von der Getriebesteuerung 2 selbst ermittelt wird. Diese Multiplikation ergibt das Getriebeeingangsdrehmoment $M_{ein}$, das über eine Leitung 22 an den zweiten Eingang des Vergleichers 23 gelegt wird. In dem Vergleicher 23 wird der nominale Wert der Drehmomentreduktion $M_{red,nom}$ gebildet, der von dem maximal zulässigen Getriebeeingangsdrehmoment abhängig ist, und über eine Signal-Leitung 24 auf ein ODER-Glied 25 gegeben.

In einem Speicher 26 sind sogenannte Schaltkomfortwerte abgelegt, die von der Schaltungsart SA und von Schaltprogrammsignalen S (für Fahrweise "sportlich"), E ("economic"), W ("Winterbetrieb") abhängen. Diese Schaltprogrammsignale werden über eine Leitung 30 und die Schaltungsart über die Leitung 15 empfangen. Der hiervon abhängige Schaltkomforfaktor $M_{red,komf}$ gelangt von dem Ausgang des Speichers 26 über eine Signalleitung 28 zu einem Multiplizierer 29 und wird dort mit der Getriebeabtriebsdrehzahl nab multipliziert. Er gibt einen modifizierten Schaltkomfortwert $M_{red,komf}^*$, der über eine Signalleitung 30 zu einem Verknüpfungsglied-Glied 25 mit ODER-Funktion gelangt. In diesem wird er mit der nominalen Drehmomentreduktion $M_{red,nom}$ verknüpft, woraus sich der tatsächliche Wert der Drehmomentreduktion $M_{red,ges}$ während des Schaltvorgangs ergibt. Die Verknüpfung ist derart, daß der jeweils größere Wert von den Signalen $M_{red,nom}$ und $M_{red,komf}$ auf eine Leitung 31 gegeben wird. Eine solche Verknüpfung wirkt als Schutzfunktion für das Getriebe. Der Wert wird in einem Digital-Analog-Wandler 32 in ein analoges Signal umgewandelt, das über eine Leitung 33, einen Verstärker 34 und eine Leitung 35 zu einem Schalter 36 gelangt. Bei geschlossenem Schalter 36 wird der Wert über die Leitung 4 an die Motorsteuerung 3 ausgegeben.

Der Wert $M_{red,ges}$ kann aber auch über einen PMW-Modulator als pulsweitenmoduliertes Signal oder über eine serielle Schnittstelle als digital kodiertes Signal an die Motorsteuerung 3übermittelt werden.

Von zwei Speichern 38 und 39 werden über Leitungen 40 bzw. 41 Signale $T_{an}$ bzw. $T_{ab}$ ausgegeben, die den Beginn und das Ende des Motoreingriffs festlegen. Eingangssignale der Speicher 38 und 39 sind die über die Leitung 15 ankommende Schaltungsart SA und zwei Drehzahlsynchronquotienten $i_{sync,x}$ (x = 1, 2), die von dem Schaltungsteil 8 über Signal-Leitungen 42 bzw. 43 zu den Eingängen des jeweiligen Speichers 38 bzw. 39 gelangen. Die digitalen Signale $T_{an}$ und $T_{ab}$ gelangen zu dem UND-Glied 12, in dem ein Schaltzeitpunktsignal $T_{schalt}$ erzeugt wird, das über eine Signal-Leitung 42 den Schalter 36 steuert.

Sobald ein bestimmtes Verhältnis der $i_{sync\ 1}$ der Eingangsdrehzahl zu der Ausgangsdrehzahl im alten oder Ausgangs-Gang der vorgesehenen Schaltung erreicht worden ist, ist der Kraftschluß in dem Getriebe soweit unterbrochen, daß die Reibelemente zum Teil durchrutschen und der Motor hochdreht. Ist der vorgegebene Wert für diesen Quotienten erreicht, so erscheint am Ausgang des Speichers 38 eine logische "1".

Wird in dem neuen oder Zielgang der Schaltung ein vorgegebener Wert des Drehzahlsynchronquotienten $i_{sync\ 2}$ erreicht, erkennt die Getriebesteuerung, daß die Reibelemente nicht mehr schleifen und daß somit das Getriebe in dem neuen Gang wieder Drehmoment übertragen kann. Am Ausgang des Speichers 39 erscheint bei Erreichen dieses vorgegebenen Quotientenwertes eine logische "0". In den Speichern 38 und 39 sind für jede Schaltungsart Kennlinien oder Werte für die Umschaltpunkte $i_{sync\ 1}$ und $i_{sync\ 2}$ abgelegt. Das Aktivierungssignal AS - auch als Armierungssignal bezeichnet - , das von dem Schaltungsteil 8 erzeugt wird, wird in dem UND-Glied mit den Signalen $T_{an}$ und $T_{ab}$ logisch verknüpft und ergibt dabei das Schaltzeitpunktsignal oder Schaltsignal $T_{schalt}$, das über eine Leitung 43 zu dem Schalter 36 gelangt und den Beginn und das Ende des jeweiligen Motoreingriffs festlegt.

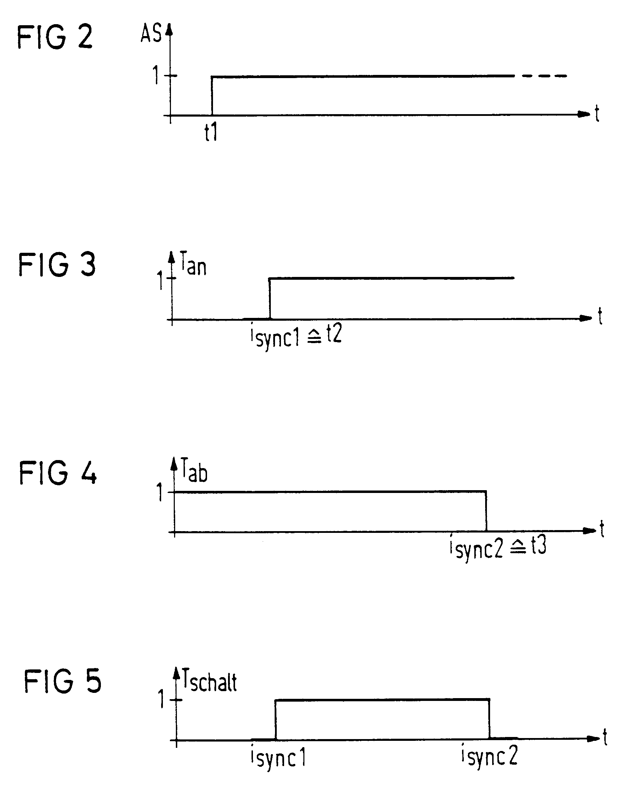

In den Figuren 2 bis 7 sind die vorstehend erläuterten Signale als logische Signalpegel mit den Werten "0" und "1" in Abhängigkeit von der Zeit t dargestellt. Figur 2 zeigt das über die Leitung 10 übertragene Aktivierungssignale AS, das zu dem Zeitpunkt $t_1$ auf den Wert "1" springt. Die Figuren 3, 4 und 5 zeigen die Signale $T_{an}$, $T_{ab}$ und $T_{schalt}$ in Abhängigkeit von der Zeit. Für die in diesen Diagrammen angegebenen besonderen Zeitpunkte gilt folgende Gesetzmäßigkeit:

$$t_1 = \text{Schaltungsbeginn}$$

$$t_2 = \frac{n_{in} \cdot i_1}{n_{out}} \cdot f(SA)$$

$$t_3 = \frac{n_{in} \cdot i_2}{n_{out}} \cdot f(SA)$$

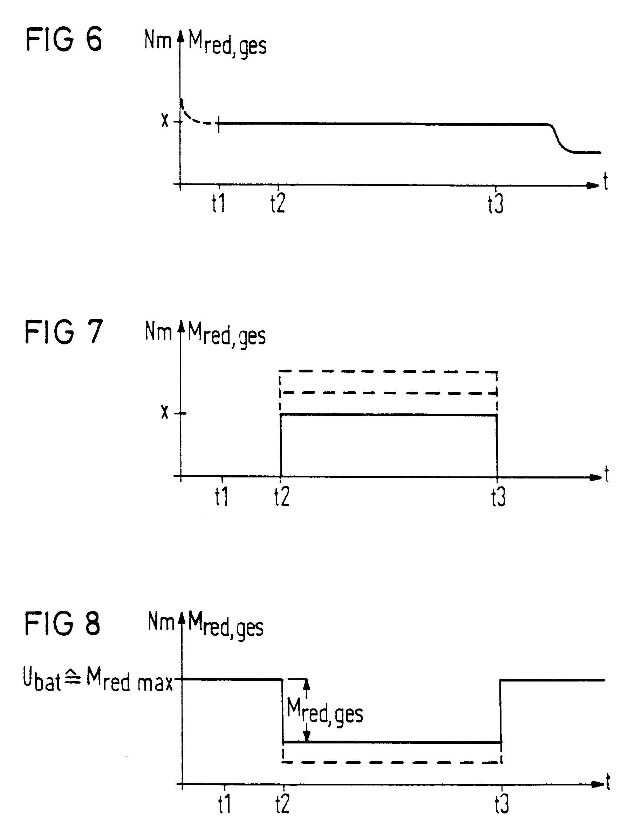

Figur 6 zeigt in stark vereinfachter Form den tatsächlichen Wert der Drehmomentreduktion und $M_{red, ges}$, so wie er sich z.B. am Ausgang eines in der Zeichnung nicht dargestellten Abtast-Halte-Gliedes ergibt. Zwischen den Zeitpunkten $t_1$ und $t_3$ nimmt die Drehmomentreduktion einen festen Wert x (z.B. in Nm) ein.

Figur 7 schließlich zeigt den digitalen Wert $M_{red, ges}$, so wie er an einem Ausgang 44 der Getriebesteuerung 2 abgegeben wird und über die Leitung 4 zu der Motorsteuerung 3 gelangt. Die Zeitspanne $t_3 - t_2$ entspricht der Dauer der Momentenreduktion für den Schaltvorgang.

An Stelle der vorstehend beschriebenen logischen Pegel kann die Schaltung auch mit invertierten logischen Pegeln realisiert werden. Der sich daraus ergebende invertierte Verlauf der tatsächlichen Drehmomentenreduktion ist in Figur 8 dargestellt.

Kann die Motorsteuerung 3 aus verschiedenen Gründen den Motoreingriff nicht in den Umfang vornehmen, den die Getriebesteuerung 2 anfordert, so beeinflußt die Motorsteuerung 3 das von der Getriebesteuerung 2 auf der Leitung 4 ausgegebene Signal $T_{schalt}$. Eine Ursache kann sein, daß die Motorsteuerung 3 mit einer Klopfregelung versehen ist und diese aktiv ist. Da deren Stellgröße ebenfalls der Zündwinkel ist, kann der Motoreingriff von der Motorsteuerung nicht wie von der Getriebesteuerung gefordert, vorgenommen werden.

Es ist deshalb vorteilhaft, daß die Getriebesteuerung 2 diese Abweichung durch einen digitalen Vergleicher 45, dem ein A/D-Wandler 46 vorgeschaltet ist, feststellt. Der Vergleicher 45 legt ein Ausgangssignal ($M_{red, ges}$ - $M_{red, ist}$) über eine Leitung 47 an den Schaltungsteil 8, wenn das Signal auf der Leitung 4 von der Motorsteuerug 3 modifiziert worden ist. Die Getriebesteuerung 2 kann dann eine Anpassung vornehmen in der Form, daß z.B. der Kupplungsdruck korrigiert wird, eine Schaltung abgebrochen wird oder Schaltpunkte so verschoben werden, daß sie in Bereichen mit geringer Klopfneigung liegen.

**Patentansprüche**

1. Steuerung für einen Kraftfahrzeugantrieb mit einem automatischen Getriebe, die aufweist:
   - eine Motorsteuerung (3), durch die eine das Drehmoment des Motors beeinflussende Größe gesteuert wird,
   - eine Getriebesteuerung (2), durch die die Schaltvorgänge des Getriebes gesteuert werden und durch die der Motorsteuerung (3) ein Steuersignal übermittelt wird, mit dem das Motordrehmoment während eines Schaltvorgangs beeinflußt wird,
   - einen Speicher (13) in dem maximal zulässige Drehmomentwerte gespeichert sind, sowie
   - eine erste Einrichtung (23, 25, 26), durch die anhand eines Vergleiches zwischen dem aktuellen Drehmomentwert und dem maximal zulässigen Drehmomentwert ein Anteil ($M_{red,ges}$) ermittelt wird, um den das Motordrehmoment während des Schaltvorgangs zu ändern ist,
   **dadurch gekennzeichnet,**
   - daß in dem Speicher (13) die am Getriebeeingang maximal zulässigen Drehmomentwerte ($M_{max}$) in Abhängigkeit von der Motordrehzahl und der Schaltungsart gespeichert sind, worin die Schaltungsart angibt, ob es sich um eine Hoch- oder eine Rückschaltung oder um eine Schaltung unter Last oder eine lastfreie Schaltung handelt;
   - daß in der Getriebesteuerung (2) eine zweite Einrichtung (8, 17, 18) enthalten ist, durch die das den aktuellen Drehmomentwert bildende aktuelle Getriebeeingangsdrehmoment ($M_{ein}$) aus $M_{ein} = WV * M_{mot}$ errechnet wird, worin WV die Wandlerverstärkung und $M_{mot}$ das Motor-

drehmoment ist;

- daß durch die erste Einrichtung (23, 25, 26) das aktuelle Getriebeeingangsdrehmoment mit dem jeweils am Getriebeeingang maximal zulässigen Drehmomentwert verglichen wird, und
- daß in der Getriebesteuerung eine Pulsformerschaltung (32,34,36) enthalten ist, durch die der Anteil in ein das Steuersignal bildendes pulsmoduliertes Signal umgesetzt wird.

2. Steuerung nach Anspruch 1, dadurch gekennzeichnet, daß die Amplitude des Steuersignals die Information über den Anteil ($M_{red,ges}$), um den das Motordrehmoment geändert wird, und die Länge des Steuersignals die Information über die Dauer ($t_3$-$t_2$) der Änderung des Motordrehmoments enthält.

3. Steuerung nach Anspruch 1, dadurch gekennzeichnet, daß das Steuersignal als pulsbreitenmoduliertes Signal (PWM) übermittelt wird.

4. Steuerung nach Anspruch 1, dadurch gekennzeichnet, daß das Steuersignal als digital codiertes Signal übermittelt wird.

5. Steuerung nach Anspruch 1, dadurch gekennzeichnet daß sie ein Verknüpfungsglied (25) mit Schutzfunktion aufweist, durch welches das größere von zwei Signalen ($M_{red,nom}$, $M_{red,komf}$) als Drehmomentänderungs-Anteil ($M_{red,ges}$) weitergeleitet wird.

## Claims

1. Control for the propulsion unit of a motor vehicle with an automatic transmission, which control has:
   - an engine control (3), by means of which a variable which influences the torque of the engine is controlled,
   - a transmission control (2) by means of which the shift processes of the transmission are controlled and by means of which a control signal is transmitted to the engine control (3), with which control signal the engine torque is influenced during a shift process,
   - a memory (13) in which the maximum acceptable torque values are stored, and
   - a first device (23, 25, 26) by means of which a quantity ($M_{red,ges}$) by which the engine torque is to be changed during the shift process is determined with reference to a comparison between the instantaneous torque value and the maximum acceptable torque value, characterized
   - in that the maximum acceptable torque values ($M_{max}$) at the transmission input are stored in the memory (13) as a function of the engine speed and the type of shift, the type of shift indicating whether it is a change up or a change down or a shift under load or a load-free shift;
   - in that a second device (8, 17, 18) is contained in the transmission control (2), by means of which second device (8, 17, 18) the instantaneous transmission input torque ($M_{ein}$) which forms the instantaneous torque value is calculated from $M_{ein} = WV * M_{mot}$, WV being the converter amplification and $M_{mot}$ being the engine torque;
   - in that the instantaneous transmission input torque is compared by the first device (23, 25, 26) with the respective maximum acceptable torque value at the gear input, and
   - in that a pulse shaper circuit (32, 34, 36) by means of which the quantities converted into a pulse-modulated signal which forms the control signal is contained in the transmission control.

2. Control according to Claim 1, characterized in that the amplitude of the control signal contains the information relating to the quantity ($M_{red, ges}$) by which the engine torque is changed and the length of the control signal contains the information relating to the duration ($t_3$- $t_2$) of the change of the engine torque.

3. Control according to Claim 1, characterized in that the control signal is transmitted as a pulse width modulated signal (PWM).

4. Control according to Claim 1, characterized in that the control signal is transmitted as digitally encoded signal.

5. Control according to Claim 1, characterized in that it has a logic-connection element (25) with a protection function, by means of which logic-connection element (25) the larger of two signals ($M_{red, nom}$, $M_{red,komf}$) is passed on as a torque-change quantity ($M_{red,ges}$).

## Revendications

1. Commande pour le dispositif de propulsion d'un véhicule à moteur à boîte de vitesses automatique comportant :

- une commande de moteur (3), par laquelle est commandée une grandeur d'influence du couple du moteur,
- une commande de boîte de vitesses (2) par laquelle sont commandées les opérations de changement de la boîte de vitesses et par laquelle est transmis à la commande de moteur (3) un signal de commande qui a une influence sur le couple moteur pendant une opération de changement de vitesses,
- une mémoire (3) dans laquelle sont stockées les valeurs de couple maximales admissibles, ainsi que
- un premier dispositif (23, 25, 26) permettant de déterminer, au moyen d'une comparaison entre le couple actuel et le couple maximal admissible, une valeur $M_{red,ges}$) pour laquelle le couple moteur doit être modifié pendant un changement de vitesses,
  caractérisé
- en ce que les valeurs de couple maximales admissibles à l'entrée de la boîte de vitesses $M_{max}$ sont stockées dans la mémoire (13) en fonction du régime du moteur et du type de changement de vitesses, le type de changement de vitesses indiquant s'il s'agit d'une montée ou d'une rétrogradation des vitesses ou d'un changement de vitesse sous charge ou d'un changement de vitesses sans charge;
- en ce que la commande de la boîte de vitesses (2) comprend un deuxième dispositif (8, 17, 18) qui calcule à partir de $M_{ein} = WV * M_{mot}$ la valeur actuelle du couple à l'entrée de la boîte de vitesses ($M_{ein}$) qui constitue la valeur actuelle du couple, WV étant l'amplification du convertisseur et $M_{mot}$ le couple moteur;
- en ce que le premier dispositif (23, 25, 26) compare le couple actuel à l'entrée de la boîte de vitesses au couple maximal admissible à l'entrée de la boîte de vitesses respectivement, et
- en ce que la commande de la boîte de vitesses comprend un circuit formeur d'impulsions (32, 34, 36) qui transforme ladite valeur en un signal modulé en impulsions qui constitue le signal de commande.

2. Commande selon la revendication 1, caractérisée en ce que l'amplitude du signal de commande représente l'information sur la valeur ($M_{red,ges}$) dont est modifié le couple moteur, et la longueur du signal de commande représente l'information sur la durée ($t_3 - t_2$) du changement du couple moteur.

3. Commande selon la revendication 1, caractérisée en ce que le signal de commande est transmis sous forme de signal modulé en durée d'impulsions (PWM).

4. Commande selon la revendication 1, caractérisée en ce que le signal de commande est transmis sous forme de signal numérique codé.

5. Commande selon la revendication 1, caractérisée en ce qu'elle comporte un élément logique (25) ayant une fonction de protection transmettant, comme valeur de modification de couple ($M_{red,ges}$), le plus grand de deux signaux ($M_{red,nom}$), $M_{red,conf}$).

FIG 1

EP 0 529 138 B1

FIG 1

8

AS — 10

i sync1 — 42

i sync2

$T_{an}$ — 38    SA    $T_{an}$    12    $T_{schalt}$ — 43

$n_{ab}$  SA  WV

15    SA — 15    i sync

43    $T_{ab}$ — 39    SA    41

14    21    $M_{red,diff}$    SA — 15    $T_{ab}$    i sync

32    34    36

D/A    33    35

$M_{red,ges}$

47    +    45    −    $M_{red,ist}$    31    D/A — 46

19    $n_{mot}$    $M_{mot}$    load mot — 17

load mot    6    $M_{mot}$    $M_{ein}$    22    +    $M_{ein}-M_{max}$    $M_{red,nom}$ — 24    25

20    18    23    $M^*_{red,komf}$    30'

$n_{mot}$ — 5 — 7

$M_{mot}$

$n_{ab}$    $M_{max}$    SA — 13    $M_{max}$ — 16

SA

15    $n_{ab}$

15    SA    SA  S  E  W — 26

S,E,W — 30    $M_{red,komf}$ — 28    29

$n_{ab}$

load mot — 6

EP 0 529 138 B1

FIG 2

AS

1

t1

t

FIG 3

$T_{an}$

1

$i_{sync1} \triangleq t2$

t

FIG 4

$T_{ab}$

1

$i_{sync2} \triangleq t3$

t

FIG 5

$T_{schalt}$

1

$i_{sync1}$

$i_{sync2}$

t

FIG 6

FIG 7

FIG 8